# EUROPEAN PATENT APPLICATION

(11) **EP 4 678 620 A1**
(43) Date of publication of application: **14.01.2026**
(21) Application number: 24188185.3
(22) Date of filing: 12.07.2024
(51) Int. Cl.: C04B 40/06, C04B 26/06

(54) **FAST-CURING ANCHOR SYSTEM WITH OPTIMIZED HARDENER DISTRIBUTION**

(71) Applicant: Hilti Aktiengesellschaft, 9494 Schaan (LI)
(72) Inventor: Bornschlegl, Alexander, 81245 München (DE); Stiegelmayer, Felix, 86807 Buchloe (DE)
(74) Representative: Hilti Aktiengesellschaft Corporate Intellectual Property

(57) **Abstract**

Present invention relates to a hardener composition comprising at least one radical initiator and at least one phlegmatizing agent, wherein at least a part of the hardener composition is in a solid non-free-flowing form, a multi-component resin system comprising the hardener composition, a process for preparing the hardener composition and the multi-component resin system and the use of the hardener composition or the multi-component resin system for fastening anchoring means in substrates.

## Description

Present invention relates to a hardener composition comprising at least one radical initiator and at least one phlegmatizing agent, wherein at least a part of the hardener composition is in a solid non-free-flowing form, a multi-component resin system comprising the hardener composition, a process for preparing the hardener composition or the multi-component resin system, and the use of the hardener composition or the multi-component resin system for fastening anchoring means in substrates.

In the field of fastening technology, the use of reactive resin mixtures as organic binders has gained acceptance in chemical fastening technology. These are often two-component systems, wherein the component A contains the reactive resin composition and the component B contains the hardener composition. Other common constituents such as fillers, accelerators, stabilizers, thixotropic agents, phlegmatizers, solvents, including reactive solvents, can be contained in one and/or the other component. By mixing the two components, the reaction is then initiated by radical formation and the resin is hardened to form a thermoset.

Such two-component systems are cartridges typically made of glass (EP0199671 A2, EP0431302, EP0432087, EP0638705), hard plastic or single- or multi-layer film bags, such as those used in Hilti's HVU and HVU2 products (DE19510307). After insertion of the cartridge into the opening and subsequent inserting of a suited anchoring element (e.g. element with a chisel tip) in top of the cartridge the glass or film cartridge is destroyed and the previously separated components are mixed allowing for hardening of the reactive resin composition.

A radical initiator is typically required for the curing of radically polymerizable compositions. There are many radical initiators known in the art, such inorganic peroxides, inorganic persulfates, inorganic perborates, and organic peroxides. Commonly used radical initiators are organic peroxides, such as benzoyl peroxide (BPO). Organic peroxides are known to decompose spontaneously and require to be phlegmatized with suitable substances for safe storage and use. The peroxides are wholly or partially coated with one or more phlegmatizing agents. The phlegmatized peroxide is then available as a powder or pellet and can be further formulated with other substances, such as fillers or additives, to form a hardener composition for a multi-component resin system.

In the field of chemical anchors several phlegmatizing agents have been known, such as dicyclohexyl phthalate, ethylene glycol dibenzoate, and diethylene glycol dibenzoate (EP3712184 A1 and EP3818026 A1).

On industrial production scale to prevent cacking, clumping and clogging it is very advantageous if the hardener composition is solid at room temperature and free-flowing.

Known commercially used examples of solid free-flowing hardener composition made of radical initiator and phlegmatizing agent include mixtures of benzoyl peroxide and ethylene glycol dibenzoate (melting point range 70-74°C) or benzoyl peroxide and diethylene glycol dibenzoate (melting point range 62-64°C). While the free-flowing nature of such a hardener composition is advantageous for the manufacturing process, it has a detrimental effect on the period of storage and application that is relevant for the user.

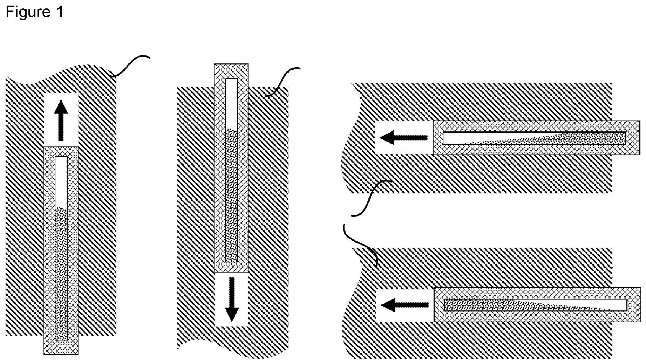

Due to the manufacturing process, it is advantageous not to completely fill the vessel/capsule with the free-flowing hardener composition. This makes it easier, for example, to seal the film bags or melt the glass capillaries/capsules, thus increasing production speed. However, this method creates a dead volume, which can lead to the hardener being unevenly distributed depending on the application geometry (Figure 1).

Solid free-flowing hardener composition comprising phlegmatizing agents such as ethylene glycol dibenzoate and diethylene glycol dibenzoate or phlegmatizing agents with melting points of less than 90°C tend to increase in bulk density when stored at elevated temperatures. Such increase in bulk density can create dead volume even when the vessel/capsule is completely filled (no dead volume) during production. Depending on the orientation of the capsule during storage (e.g. horizontal, vertical, or inclined), this can lead to an uneven distribution of the hardener composition along the longitudinal axis of the capsule. This uneven distribution is then maintained. The consequences of an uneven distribution of the hardener composition along the longitudinal axis can lead to load fluctuation of the chemical anchor. For product quality control such inconsistencies must be avoided. This increase in bulk density and uneven distribution already occurs at temperatures and storage conditions at which the radical initiator benzoyl peroxide itself does not yet show any noticeable decomposition.

Thus, there is a need for a hardener composition, particularly for chemical anchor applications, which would be in a solid non-free-flowing form allowing an even distribution in a vessel/capsule that does not change during storage, independent of orientation, over prolonged time, preferably a year or longer, and/or elevated temperatures, preferably temperatures of 30 °C or more. Further, there is a need for a multi-component system comprising the hardener composition in a solid non-free flowing form that has an even distribution in the capsule that does not change during storage, independent of orientation, over prolonged time and/or elevated temperatures allowing for a high-quality product which does not show load fluctuations of the prior art.

Thus, the object of the present invention is to provide a hardener composition for use in a multi-component resin composition for chemical fastening of anchoring means which has an even distribution of the hardener composition along the longitudinal axis of the vessel/capsule that is maintained during storage, independent of orientation, over prolonged time, preferably a year or longer, and/or elevated temperatures, preferably temperatures of 30 °C or more. This would allow for a high-quality product which does not show load fluctuations of the prior art and is not affected by increase in bulk density that occurs with solid free-flowing hardener compositions during storage and/or elevated temperatures.

This object is achieved by providing a hardener composition according to claim 1, which has at least a part of the hardener composition in a solid non-free-flowing form.

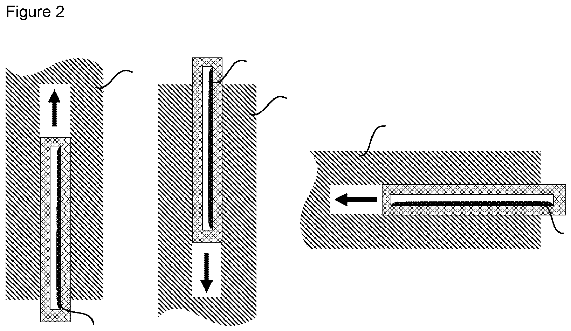

It was surprisingly found that by applying a suitable temperature for a certain period of time to the hardener composition in a vessel in a defined orientation the particles of the hardener composition are sintered and fused causing the loss of the free flow of hardener component particles. The resulting arrangement is characterized by the fact that, regardless of the installation geometry, there is always a defined hardener composition distribution (Figure 2).
Figure 1: displays an assembled product comprising an inner vessel which has a solid free-flowing hardener composition of the prior art and the uneven distribution of said hardener composition during application at different orientations.
Figure 2: displays an assembled product comprising a vessel which has a solid non-free-flowing hardener composition of the present invention and the even distribution of said hardener composition which is maintained at different orientations during application.

All standards cited in this text (e.g., DIN standards) were used in the version that was current on the filing date of this application.

Present invention relates to a hardener composition comprising at least one radical initiator and at least one phlegmatizing agent, wherein at least a part of the hardener composition is in a solid non-free-flowing form.

It is understood that a hardener composition that is in a solid non-free-flowing form would not be affected, or to a much lower degree affected, by the increase in bulk density during storage or at elevated temperatures. It is also understood that a hardener composition that is in a solid non-free-flowing form would maintain its distribution along the longitudinal axis of a vessel and/or capsule.

It is preferred that the hardener composition displays a sieve residue of more than 15 %, more preferably sieve residue in the range of from 15 to 100 %, more preferably in the range of from 50 to 80 %, more preferably in the range of 55 to 75 % of the total mass of the hardener composition with a sieve analysis carried out with a 1.0 mm standard sieve (DIN ISO 3310-1). A typical sieve analysis uses a sieve with a wire mesh screen of graded mesh size. The sieve residue is the substance (in the present case hardener composition) that is left on the sieve after the sieve analysis according to the prescribed standards has been carried out. It is understood that the sieve residue has the particle size that is bigger than the sieve/mesh size.

In another embodiment, it is preferred that less than 20 % of the hardener composition by weight, preferably less than 10 % of the hardener composition, flows out of the opened vessel, preferably a film bag or glass capillary. It is preferred that the opened vessel is opened only on one side and is tilted face downwards vertically (for the purposes to check the amount of hardener to flow out) or downwards and slanted at an angle.

It is preferred that the hardener composition further comprises at least one additive and/or filler. Suitable additives can be selected from the group comprising waxes, paraffins, polymers (preferably thermoplastic polymers), and mixtures of two or more thereof. It is preferred that at least one additive and/or filler has a melting point of less than 90 °C, preferably less than 80 °C. It is preferred that the hardener composition comprises at least one additive and/or filler in the amount ranging of from 1 to 60 weight %, more preferably in the range of 20 to 40 weight % based on the total weight of the hardener composition.

In another embodiment hardener composition can also contain further additives, specifically emulsifiers, antifreeze agents, buffers and/or rheological additives, and/or fillers.

Suitable emulsifiers are; ionic, nonionic or amphoteric surfactants; soaps, wetting agents, detergents; polyalkylene glycol ethers; salts of fatty acids, mono- or diglycerides of fatty acids, sugar glycerides, lecithin; alkanesulfonates, alkylbenzenesulfonates, fatty alcohol sulfates, fatty alcohol polyglycol ethers, fatty alcohol ether sulfates, sulfonated fatty acid methyl esters; fatty alcohol carboxylates; alkyl polyglycosides, sorbitan esters, N-methyl glucamides, sucrose esters; alkyl phenols, alkyl phenol polyglycol ethers, alkyl phenol carboxylates; quaternary ammonium compounds, esterquats, carboxylates of quaternary ammonium compounds.

Suitable antifreeze agents are: organic or inorganic, water-soluble additives that lower the freezing temperature of the water; mono-, bi- or higher-functional alcohols such as ethanol, n- or iso-propanol, n-, iso- or tert-butanol, etc.; ethylene glycol, 1,2- or 1,3-propylene glycol, glycerol, trimethylol propane, etc., oligo- or polyglycols such as dialkylene glycols, trialkylene glycols, etc.; sugars, especially mono- or disaccharides; trioses, tetroses, pentoses and hexoses in their aldehyde or keto form, and the analogous sugar alcohols. Examples include, but are not limited to, glyceraldehyde, fructose, glucose, sucrose, mannitol, etc.

Suitable buffers are organic or inorganic acid/base pairs that stabilize the pH of the hardener component, such as acetic acid/alkali acetate, citric acid/monoalkali citrate, monoalkali/dialkali citrate, dialkali/trialkali citrate, combinations of mono-, di- and/or tribasic alkali phosphates, optionally with phosphoric acid; ammonia with ammonium salts; carbonic acid-bicarbonate buffers, etc. Intramolecular, so-called good buffers can also be used, such as 4-(2-hydroxyethyl)-1-piperazineethanesulfonic acid (HEPES) or 2-(N-morpholino)ethanesulfonic acid (MES) as well as tris(hydroxymethyl)-aminomethane (TRIS), etc.

The flow properties are adjusted by adding thickening substances, also known as rheological additives. Suitable rheological additives are: phyllosilicates such as laponites, bentones or montmorillonite, Neuburg siliceous earth, fumed silicas, polysaccharides; polyacrylate, polyurethane or polyurea thickeners and cellulose esters. Wetting agents and dispersants, surface additives, defoamers & deaerators, wax additives, adhesion promoters, viscosity reducers or process additives can also be added for optimization.

The fillers used are conventional fillers, preferably mineral or mineral-like fillers, such as quartz, glass, sand, quartz sand, quartz powder, porcelain, corundum, ceramics, talc, silica (e.g. fumed silica), silicates, clay, titanium dioxide, chalk, barite, feldspar, basalt, aluminum hydroxide, granite or sandstone, polymeric fillers such as thermosets, hydraulically curable fillers such as gypsum, quicklime or cement (e.g. alumina cement or Portland cement), metals such as aluminum, carbon black, and also wood, mineral or organic fibers, or the like, or mixtures of two or more thereof, which can be added as powder, in the form of granules or in the form of shaped bodies. The fillers may be present in any desired forms, for example as powder or flour, or as shaped bodies, for example in cylindrical, annular, spherical, platelet, rod, saddle or crystal form, or else in fibrous form (fibrillar fillers), and the corresponding base particles preferably have a maximum diameter of 10 mm. However, the globular, inert substances (spherical form) have a preferred and more pronounced reinforcing effect.

The sum of the additives not already contained in the commercial products can be from 0 to 30 weight %, preferably from 0 to 25 weight %, particularly preferably from 0 to 20 weight % based in each case on the hardener composition.

In one embodiment the hardener composition also contains a rheological additive based on a phyllosilicate, in particular an activated or swellable phyllosilicate. The swellable phyllosilicate is particularly preferably a magnesium aluminum silicate or a sodium aluminum silicate.

It is preferred that at least one phlegmatizing agent has a melting point of less than 90 °C, more preferably less than 80 °C. It is preferred that at least one phlegmatizing agent has a melting point in the range of from 50 to 80 °C, more preferably in the range of from 60 to 75 °C.

It is preferred that the hardener composition displays a melting point in the range of 50 to 80 °C, more preferably in the range of 60 to 75 °C.

It is preferred that at least one phlegmatizing agent is a phthalate comprising phlegmatizing agent and/or a benzoate comprising phlegmatizing agent, preferably a benzoate comprising phlegmatizing agent.

It is preferred that at least one phlegmatizing agent is selected from the group consisting of ethylene glycol dibenzoate, diethylene glycol dibenzoate, dicyclohexyl phthalate, and mixtures of two or more thereof, more preferably ethylene glycol dibenzoate and/or dicyclohexyl phthalate.

In the hardener composition according to the present invention it is preferred that the at least one radical initiator is selected from the group consisting of inorganic peroxides, inorganic persulfates, inorganic perborates, organic peroxides, and mixtures of two or more thereof, preferably at least one radical initiator is at least one organic peroxide.

It is preferred that at least one radical initiator is selected from the group consisting of diacyl peroxides, diketone peroxides, peroxyester of mono or dicarboxylic acids, alkyl peresters, and mixtures of two or more thereof, preferably diacyl peroxides.

Examples of suitable peroxides are peroxycarbonates (of formula -OC(O)OO-), peroxyesters (of formula -C(O)OO-), diacyl peroxides (of formula -C(O)OOC(O)-), dialkyl peroxides (of formula -OO-) and the like. These may be present as oligomers or polymers. A comprehensive set of examples of suitable peroxides is described, for example, in application US 2002/0091214 A1, paragraph [0018].

The peroxides are preferably selected from the group of organic peroxides. Suitable organic peroxides are: tertiary alkyl hydroperoxides such as tert-butyl hydroperoxide and other hydroperoxides such as cumene hydroperoxide, peroxyesters or peracids such as tert-butyl peresters (e.g. tert-butyl peroxybenzoate), benzoyl peroxide, peracetates and perbenzoates, lauroyl peroxide including (di)peroxyesters, perethers such as peroxy diethyl ether, perketones such as methyl ethyl ketone peroxide. The organic peroxides used as curing agents are often tertiary peresters or tertiary hydroperoxides, i.e. peroxide compounds having tertiary carbon atoms which are bonded directly to an -O-O-acyl or -OOH group. However, mixtures of these peroxides with other peroxides can also be used according to the invention. The peroxides may also be mixed peroxides, i.e. peroxides which have two different peroxide-carrying units in one molecule. Preferably, benzoyl peroxide (BPO) or Cert-butyl peroxybenzoate is used for curing.

It is preferred that at least one radical initiator is selected from a group consisting of benzoyl peroxide, di(p-chlorbenzoyl)peroxide, di-(2,4-dichlorobenzoyl)peroxide, acetyl benzoyl peroxide, 1,1'-dihydroxydicyclohexyl peroxide, methyl ethyl ketone peroxide, mono-tert-butyl malonate, di-tert-butyl diperoxyphthalate, tert-butyl peroxybenzoate and combinations of two or more thereof, more preferably at least one radical initiator is benzoyl peroxide.

It is preferred that the hardener composition is enclosed in a vessel, preferably the vessel is a glass capillary, a plastic capsule, a plastic cartridge, or a film bag. It is particularly preferred that the hardener composition of the present invention is enclosed in a vessel made of a film bag, more preferably a composite film bag. In another embodiment it is also preferred that the vessel is a glass capillary.

Present invention also relates to a multi-component resin system comprising component (A) and component (B), wherein component (A) comprises a reactive resin composition and wherein component (B) comprises the hardener composition according to any one of the embodiments as disclosed herewith.

### Radically curable compound

It is preferred that the reactive resin composition comprises at least one radically curable compound.

Compounds based on urethane(meth)acrylate-based compounds, compounds based on epoxy(meth)acrylate compounds, methacrylates of alkoxylated bisphenols, compounds based on further ethylenically unsaturated compounds and combinations thereof are suitable as radically polymerizable compounds for the reactive resin, as is known to a person skilled in the art.

Particularly suitable and preferred vinyl ester resins are (meth)acrylate-functionalized resins, which are obtained, for example, by reacting di- and/or higher-functional isocyanates with suitable acrylic compounds, in some cases with the help of hydroxy compounds that contain at least two hydroxyl groups, as described for example in DE 3940309 A1. Very particularly suitable and preferred are the urethane methacrylate resins (which are also referred to as vinyl ester urethane resins) described in DE 102011017 626 B4.

Aliphatic (cyclic or linear) and/or aromatic di- or higher-functional isocyanates or prepolymers thereof can be used as isocyanates. The use of such compounds increases wettability and thus improves the adhesive properties. Aromatic di- or higher-functional isocyanates or prepolymers thereof are preferred, with aromatic di- or higher-functional prepolymers being particularly preferred. Toluylene diisocyanate (TDI), methylene diphenyl diisocyanate (MDI) and polymeric Methylene diphenyl diisocyanate (pMDI) for increasing chain stiffening, and hexane diisocyanate (HDI) and isophorone diisocyanate (IPDI), which improve flexibility, may be mentioned by way of example, of which polymeric methylene diphenyl diisocyanate (pMDI) is very particularly preferred.

Suitable acrylic compounds are acrylic acid and acrylic acids substituted on the hydrocarbon group, such as methacrylic acid, hydroxyl-group-containing esters of acrylic or methacrylic acid with polyhydric alcohols, pentaerythritol tri(meth)acrylate, glycerol di(meth)acrylate, such as trimethylolpropane di(meth)acrylate and neopentyl glycol mono(meth)acrylate. Acrylic or methacrylic acid hydroxyalkyl esters, such as hydroxyethyl (meth) acrylate, hydroxypropyl (meth) acrylate, polyoxyethylene (meth) acrylate, polyoxypropylene(meth)acrylate. Particular preference is given here to the corresponding methacrylates, because the steric hindrance of acrylates leads to improved alkali stability.

Also suitable are compounds which are based at least in part on a recycled compound, in particular of (meth)acrylic esters. Particular preference is given to a (meth) acrylic ester which is obtained from recycled methyl(meth)acrylate. Suitable compounds include hydroxyl-group-containing esters of acrylic or methacrylic acid with polyhydric alcohols, pentaerythritol tri(meth)acrylate, glycerol di(meth)acrylate, such as trimethylolpropane di(meth)acrylate, and neopentyl glycol mono(meth)acrylate, preferably acrylic or methacrylic acid hydroxyalkyl esters, such as hydroxyethyl(meth)acrylate, hydroxypropyl(meth)acrylate, polyoxyethylene(meth)acrylate and polyoxypropylene(meth)acrylate, each of which can be obtained from recycled methyl(meth)acrylate.

Hydroxy compounds that can optionally be used are suitable dihydric or higher alcohols, for example secondary products of ethylene oxide or propylene oxide, such as ethanediol, di- or triethylene glycol, propanediol, dipropylene glycol, other diols, such as 1,4-butanediol, 1,6-hexanediol, neopentyl glycol, diethanolamine, further bisphenol A or F or their ethoxylation/propoxylation and/or hydrogenation or halogenation products, higher alcohols, such as glycerol, trimethylolpropane, hexanetriol and pentaerythritol, hydroxyl-group-containing polyethers, for example oligomers of aliphatic or aromatic oxiranes and/or higher cyclic ethers, such as ethylene oxide, propylene oxide, styrene oxide and furan, polyethers which contain aromatic structural units in the main chain, such as those of bisphenol A or F, hydroxyl-group-containing polyesters based on the above-mentioned alcohols or polyethers and dicarboxylic acids or their anhydrides, such as adipic acid, phthalic acid, tetra- or hexahydrophthalic acid, HET acid, maleic acid, fumaric acid, itaconic acid, sebacic acid and the like. Particularly preferred are hydroxy compounds having aromatic structural units to reinforce the chain of the resin, hydroxy compounds containing unsaturated structural units, such as fumaric acid, to increase the crosslinking density, branched or star-shaped hydroxy compounds, in particular trihydric or higher valence alcohols and/or polyethers or polyesters containing the structural units thereof, branched or star-shaped urethane (meth)acrylates to achieve lower viscosity of the resins or the solutions thereof in reactive diluents and higher reactivity and crosslinking density.

The vinyl ester resin preferably has a molecular weight Mn in the range from 500 to 3,000 daltons, more preferably 500 to 1,500 daltons (according to ISO 13885-1). The vinyl ester resin has an acid value in the range of 0 to 50 mg KOH/g resin, preferably in the range of 0 to 30 mg KOH/g resin (according to ISO 2114-2000).

Preferred vinyl ester resins are (meth)acrylate-functionalized resins and resins which are obtained by reacting an epoxy oligomer or epoxy polymer with methacrylic acid or methacrylamide, preferably with methacrylic acid, and in some cases with a chain extender, such as diethylene glycol or dipropylene glycol. Examples of compounds of this kind are known from the applications US 3297745 A, US 3772404 A, US 4618658 A, GB 2217722 A1, DE 3744390 A1 and DE 4131457 A1.

The epoxy(meth)acrylate resins are obtained by reacting an organic compound having epoxide groups with acrylic acid or methacrylic acid, so that the resins necessarily have acryloxy groups or methyloxy groups at the molecular ends and hydroxyl groups in the 2 position for the formed acryloxy or methacryloxy group (also referred to below as α hydroxyl groups) in the main chain of the molecule. It is expedient to use 0.7 to 1.2 carboxyl equivalents of (meth)acrylic acid per epoxide equivalent. The organic compounds comprising epoxide groups and the (meth)acrylic acid are preferably used in approximately stoichiometric ratios, i.e., an equivalent (meth)acrylic acid is used per epoxide equivalent of the organic compound, for example. The reaction is carried out in the presence of suitable catalysts known to those skilled in the art, such as quaternary ammonium salts.

Advantageously, organic compounds having epoxide groups are used with a molecular weight having a number average molecular weight *M̅ₙ* in the range from 129 to 2,400 g/mol and which include at least one, preferably 1.5 to 2 epoxy groups per molecule in the average. The epoxy groups are particularly preferably of the glycidyl ether or glycidyl ester type obtained by reacting an epihalohydrin, in particular epichlorohydrin, with a mono- or polyfunctional aliphatic or aromatic hydroxy compounds, thiol compounds or carboxylic acids or a mixture thereof. The organic compound comprising obtained epoxide groups has an epoxy equivalent mass (EEW) preferably in the range from 87 to 1600 g/val, more preferably in the range from 160 to 800 g/val and most preferably in the range from 300 to 600 g/val.

Examples of suitable compounds having epoxide groups are polyglycidyl ethers of polyhydric phenols, for example pyrocatechol, resorcinol, hydroquinone, 4,4'-dihydroxydiphenylmethane, 2,2- (4,4'-dihydroxydiphenyl) propane (bisphenol A), bis(4-hydroxyphenyl) methane (bisphenol F), 4,4'-dihydroxydiphenyl sulfone (bisphenol S), 4,4'-dihydroxydiphenyl cyclohexane, tris (4-hydroxyphenyl)-methane, novolacs (i.e., from reaction products of mono- or polyhydric phenols with aldehydes, in particular formaldehyde, in the presence of acidic catalysts), such as phenol novolac resin, cresol novolac resin.

Furthermore, the following can be mentioned as non-limiting examples: glycidyl ethers of monoalcohols, for example n-butanol or 2-ethylhexanol; or glycidyl ethers of polyhydric alcohols, for example of 1,3-butanediol, 1,4-butanediol, 1,6-hexanediol, glycerol, benzyl alcohol, neopentyl glycol, ethylene glycol, cyclohexanedimethanol, trimethylolpropane, pentaerythritol and polyethylene glycols, triglycidyl isocyanurate; polyglycidyl thioether of polyvalent thiols, such as bismercaptomethylbenzene; or glycidyl esters of monocarboxylic acids, such as versatic acid; or glycidyl esters of polyvalent, aromatic and aliphatic carboxylic acids, for example phthalic acid diglycidyl esters, isophthalic acid diglycidyl esters, terephthalic acid diglycidyl esters, tetrayhydrophthalic acid diglycidyl esters, adipinic acid diglycidyl esters, and hexahydrophthalic acid diglycidyl esters.

Particularly preferred organic compounds comprising epoxide groups are diglycidyl ethers of divalent hydroxy compounds of the general formula (VI) 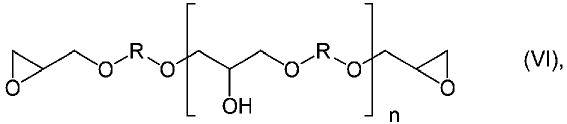 in which R is an unsubstituted or substituted aliphatic or aromatic group, preferably an aromatic group, more preferably an aromatic group having 6 to 24 carbon atoms, and the average value for n is 0 to 3. R is particularly preferably a group of the bisphenol type, such as bisphenol A, bisphenol F or bisphenol S, or of the novolac type, wherein a group of the bisphenol type is very particularly preferred. The average value for n is preferably about 0.1, about 1 or about 2. Within the meaning of the present invention, compounds in which n ~ 0.1 are referred to as monomers, and compounds in which n ~ 1 or 2 are referred to as polymers.

The polymeric compounds have the advantage over the monomeric compounds that the reactive resin content in the reactive resin composition can be significantly reduced, which makes the reactive resin composition more economical in production, because the production costs can thereby be reduced.

Within the meaning of the invention, vinyl ester resins are oligomers or polymers having at least one (meth)acrylate end group, what are referred to as (meth)acrylate-functionalized resins, which also include primarily epoxy(meth)acrylates.

Vinyl ester resins, which have unsaturated groups only in the end position, are obtained, for example, by reacting epoxy oligomers or polymers (for example bisphenol A digylcidyl ether, phenol novolac-type epoxies or epoxy oligomers based on tetrabromobisphenol A) with (meth)acrylic acid or (meth)acrylamide, for example. Preferred vinyl ester resins are (meth)acrylate-functionalized resins and resins which are obtained by reacting epoxy oligomers or epoxy polymers with methacrylic acid or methacrylamide, preferably with methacrylic acid. Examples of compounds of this kind are known from the applications US 3297745 A, US 3772404 A, US 4618658 A, GB 2217722 A1, DE 3744390 A1 and DE 4131457 A1. In this context, reference is made to the application US 2011/071234.

The vinyl ester resin preferably has a molecular weight Mn in the range of 500 to 3,000 daltons, more preferably 500 to 1,500 daltons (according to ISO 13885-1). The vinyl ester resin has an acid value in the range of 0 to 50 mg KOH/g resin, preferably in the range of 0 to 30 mg KOH/g resin (according to ISO 2114-2000).

Ethoxylated bisphenol A di(meth)acrylate having a degree of ethoxylation of 2 to 10, preferably of 2 to 4, difunctional, trifunctional or higher functional urethane (meth)acrylate oligomers, or mixtures of these polymerizable constituents are particularly suitable as the vinyl ester resin.

Examples of epoxy(meth)acrylates of this kind are those of formula (V) 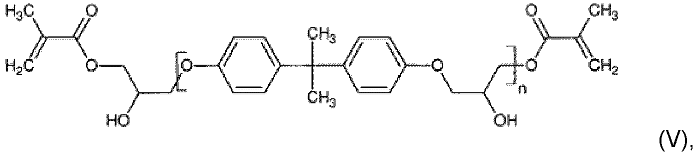 wherein n represents a number greater than or equal to 1 (if mixtures of different molecules are present with different n values and are represented by formula (V), non integers are also possible as an average).

Further examples of the propoxylated or in particular ethoxylated aromatic diol, such as bisphenol A, bisphenol F or novolac (in particular di-)(meth)acrylates, are those of formula (VI) 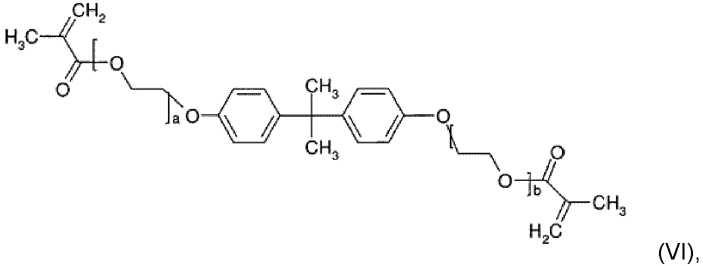 wherein a and b each independently represent a number greater than or equal to 0 with the proviso that preferably at least one of the values is greater than 0, preferably both 1 or greater (if mixtures of different molecules having different (a and b) values are present and are represented by the formula (VI), non-integer numbers are also possible as the average value).

The known reaction products of di- or polyisocyanates and hydroxyalkylmethylacrylates, as described, for example, in DE 2312559 A1, adducts of (di)isocyanates and 2,2-propane bis[3-(4-phenoxy)-1,2-hydroxypropane-1-methacrylate] according to US-PS 3 629 187, and the adducts of isocyanates and methacryloyl alkyl ethers, alkoxybenzenes or alkoxycycloalkanes, as described in EP 44352 A1, are very particularly suitable. In this context, reference is made to DE 2312559 A1, DE 19902685 A1, EP 0684906 A1, DE 4111828 A1 and DE 19961342 A1. Of course, mixtures of suitable monomers can also be used.

All of these resins that can preferably be used according to the invention can be modified according to methods known to a person skilled in the art, for example to achieve lower acid numbers, hydroxide numbers or anhydride numbers, or can be made more flexible by introducing flexible units into the backbone, and the like.

In addition, the reactive resin may contain other reactive groups that can be polymerized with a radical initiator, such as peroxides, for example reactive groups derived from itaconic acid, citraconic acid and allylic groups and the like, as described, for example, in WO 2010/108939 A1 (itaconic acid ester).

The reactive resin system can contain suitable reactive diluents, as are described in the applications EP 1 935 860 A1 and DE 195 31 649 A1. Preferably, the reactive resin composition contains, as the reactive diluents, a (meth)acrylic acid ester, particularly preferably aliphatic or aromatic C₅-C₁₅-(meth)acrylates being selected. Suitable examples comprise: 2-, 3-hydroxypropyl(meth)acrylate (HP(M)A), 1,3-propanediol di(meth)acrylate, 1,3-butanediol di(meth)acrylate, 1,4-butanediol di(meth)acrylate, trimethylolpropane tri(meth)acrylate, phenethyl (meth)acrylate, tetrahydrofurfuryl (meth)acrylate, *N,N-*dimethylaminoethyl (meth)acrylate, *N*,*N*-dimethylaminomethyl (meth)acrylate, acetoacetoxyethyl (meth)acrylate, isobornyl (meth)acrylate, 2-ethylhexyl (meth)acrylate, methoxypolyethylene glycol mono(meth)acrylate, trimethylcyclohexyl (meth)acrylate, 2-hydroxyethyl (meth)acrylate, dicyclopentenyloxyethyl (meth)acrylate and/or tricyclopentadienyl di(meth)acrylate, bisphenol A (meth)acrylate, novolac epoxy di(meth)acrylate, di-[(meth)acryloyl-maleoyl]-tricyclo-5.2.1.0.^{2.6}-decane, dicyclopentenyloxyethylcrotonate, 3-(meth)acryloyl-oxymethyl-tricylo-5.2.1.0.^{2.6}-decane, 3-(meth)cyclopentadienyl (meth)acrylate, and decalyl-2-(meth)acrylate; glycerol formal(meth)acrylate; solketal (meth)acrylate, cyclohexyl (meth)acrylate, phenoxyethyl di(meth)acrylate, methoxyethyl (meth)acrylate, tert-butyl (meth)acrylate and norbornyl (meth)acrylate. Methacrylates are preferred over acrylates. Particularly preferred are 2- and 3-hydroxypropyl methacrylate (HPMA), 1,2-ethanediol dimethacrylate, 1,4-butanediol dimethacrylate (BDDMA), 1,3-butanediol dimethacrylate, trimethylolpropane trimethacrylate, acetoacetoxyethyl methacrylate, isobornyl methacrylate, bisphenol A methacrylate, trimethylcyclohexyl methacrylate, 2-hydroxyethyl methacrylate, PEG200 or PEG400 dimethacrylate and norbornyl methacrylate. 1,4-Butanediol dimethacrylate and a mixture of 2- and 3-hydroxypropyl methacrylate (HPMA), or a mixture of these three methacrylates, are very particularly preferred. A mixture of 2- and 3-hydroxypropyl methacrylate (HPMA) is most preferred. In principle, other conventional radically polymerizable compounds, alone or in a mixture with the (meth)acrylic acid esters, can also be used as reactive diluents, e.g., styrene, α-methylstyrene, alkylated styrenes, such as *tert*-butylstyrene, divinylbenzene and vinyl and allyl compounds, of which the representatives that are not subject to mandatory labeling are preferred. Examples of vinyl or allyl compounds of this kind are hydroxybutyl vinyl ether, ethylene glycol divinyl ether, 1,4-butanediol divinyl ether, trimethylolpropane divinyl ether, trimethylolpropane trivinyl ether, mono-, di-, tri-, tetra- and polyalkylene glycol vinyl ether, mono-, di-, tri-, tetra- and polyalkylene glycol allyl ether, adipic acid divinyl ester, trimethylolpropane diallyl ether and trimethylolpropane triallyl ether.

### Accelerator

It is preferred that component (A) according to the present invention comprises at least one accelerator. Suitable accelerators are known to a person skilled in the art. It is preferred that at least one accelerator is an amine. Suitable amines are selected from the following compounds, which are described in application US 2011071234 A1, for example: dimethylamine, trimethylamine, ethylamine, diethylamine, triethylamine, n-propylamine, di-n-propylamine, tri-n-propylamine, iso-propylamine, di-iso-propylamine, tri-iso-propylamine, n-butylamine, iso-butylamine, tert-butylamine, di-n-butylamine, di-iso-butylamine, tri-iso-butylamine, pentylamine, iso-pentylamine, di-iso-pentylamine, hexylamine, octylamine, dodecylamine, laurylamine, stearylamine, aminoethanol, diethanolamine, triethanolamine, aminohexanol, ethoxyaminoethane, dimethyl(2-chloroethyl)amine, 2-ethylhexylamine, bis(2-chloroethyl)amine, 2-ethylhexylamine, bis(2-ethylhexyl)amine, N-methylstearylamine, dialkylamines, ethylenediamine, N,N'-dimethylethylenediamine, tetramethylethylenediamine, diethylenetriamine, permethyldiethylenetriamine, triethylenetetramine, tetraethylenepentamine, 1,2-diaminopropane, di-propylenetriamine, tripropylenetetramine, 1,4-diaminobutane, 1,6-diaminohexane, 4-amino-1-diethylaminopentane, 2,5-diamino-2,5-dimethylhexane, trimethylhexamethylenediamine, N,N-dimethylaminoethanol, 2-(2-diethylaminoethoxy)ethanol, bis(2-hydroxyethyl)oleylamine, tris[2(2-hydroxyethoxy)ethyl]amine, 3-amino-1-propanol, methyl(3-aminopropyl)ether, ethyl-(3-aminopropyl)ether, 1,4-butanediol-bis(3-arninopropyl ether), 3-dimethylamino-1-propanol, 1-amino-2-propanol, 1-diethylamino-2-propanol, di-iso-propanolamine, methyl-bis(2-hydroxypropyl)amine, tris(2-hydroxypropyl)amine, 4-amino-2-butanol, 2-amino-2-methylpropanol, 2-amino-2-methylpropanediol, 2-amino-2-hydroxymethylpropanediol, 5-diethylamino-2-pentanone, 3-methylaminopropionitrile, 6-aminohexanoic acid, 11-aminoundecanoic acid, 6-aminohexanoic acid ethyl ester, 11-aminohexanoic acid isopropyl ester, cyclohexylamine, N-methylcyclohexylamine, N,N-dimethylcyclohexylarnine, dicyclohexylamine, N-ethylcyciohexylamine, N-(2-hydroxyethyl)cyclohexylamine, N,N-bis(2-hydroxyethyl)cyclohexylamine, N-(3-aminopropyl)cyclohexylamine, aminomethylcyclohexane, hexahydrotoluidine, hexahydrobenzylamine, aniline, N-methylaniline, N,N-dimethylaniline, N,N-diethylaniline, N,N-di-propylaniline, iso-butylaniline, toluidines, diphenylamine, hydroxyethylaniline, bis(hydroxyethyl)aniline, chloroaniline, aminophenols, aminobenzoic acids and esters thereof, benzylamine, dibenzylamine, tribenzylamine, methyldibenzylamine, α-phenylethylamine, xylidine, di-iso-propylaniline, dodecylaniline, aminonaphthalene, N-methylaminonaphthalene, N,N-dimethylaminonaphthalene, N,N-dibenzyinaphthalene, diaminocyclohexane, 4,4'-diamino-dicyclohexylmethane, diamino-dimethyl-dicyclohexylmethane, phenylenediamine, xylylenediamine, diaminobiphenyl, naphthalenediamines, benzidines, 2,2-bis(aminophenyl)propane, aminoanisoles, aminothiophenols, aminodiphenyl ethers, aminocresols, morpholine, N-methylmorpholine, N-phenylmorpholine, hydroxyethylmorpholine, N-methylpyrrolidine, pyrrolidine, piperidine, hydroxyethylpiperidine, pyrroles, pyridines, quinolines, indoles, indolenines, carbazoles, pyrazoles, imidazoles, thiazoles, pyrimidines, quinoxalines, aminomorpholine, dimorpholineethane, [2,2,2]-diazabicyclooctane and N,N-dimethyl-p-toluidine.

Preferred amines are aniline derivatives, toluidine derivatives and N,N-bisalkylarylamines, such as N,N-dimethylaniline, N,N-diethylaniline, toluidine, N,N-bis(hydroxyalkyl)arylamines, N,N-bis(2-hydroxyethyl)aniline, N,N-bis(2-hydroxyethyl)toluidine, N,N-bis(2-hydroxypropyl)aniline, N,N-bis(2-hydroxypropyl)toluidine, N,N-bis(3-methacryloyl-2-hydroxypropyl)-p-toluidine, N,N-dibutoxyhydroxypropyl-p-toluidine and 4,4'-bis(dimethylamino)diphenylmethane, Polymeric amines, such as those obtained by polycondensation of N,N-bis(hydroxyalkyl)aniline with dicarboxylic acids or by polyaddition of ethylene oxide and these amines, are also suitable as accelerators.

Preferred accelerators are N,N-bis(2-hydroxypropyl)toluidine, N,N-bis(2-hydroxyethyl)toluidine and para-toluidine ethoxylate (Bisomer^{®} PTE).

The reaction resin system can contain the accelerator in an amount of 0 to 10 weight %. preferably 0.01 to 5 weight %, particularly preferably 0.5 to 3 weight %, based on the total amount of component (A). If a plurality of accelerators is contained, the amount just mentioned corresponds to the total amount of accelerators.

### Inhibitor

It is preferred that component (A) and/or component (B) of the present invention comprises at least one inhibitor. In yet a further embodiment, the reactive resin composition also contains an inhibitor both for the storage stability and for adjusting the gel time. The component (A) can contain the inhibitor alone or together with the accelerator. A suitably coordinated accelerator-inhibitor combination is preferably used to adjust the processing time or gel time.

Suitable inhibitors are those commonly used for radically polymerizable compounds, as known to a person skilled in the art. The inhibitors are preferably selected from phenolic compounds and non-phenolic compounds, such as stable radicals and/or phenothiazines.

Suitable phenolic inhibitors are phenols, such as 2-methoxyphenol, 4-methoxyphenol, 2,6-di-tert-butyl-4-methylphenol, 2,4-di-tert-butylphenol, 2,6-di-tert-butylphenol, 2,4,6-trimethylphenol, 2,4,6-tris(dimethylaminomethyl)phenol, 4,4'-thio-bis(3-methyl-6-tert-butylphenol), 4,4'-isopropylidenediphenol, 6,6'-di-tert-butyl-4,4'-bis(2,6-di-tert-butylphenol), 1,3,5-trimethyl-2,4,6-tris(3,5-di-tert-butyl-4-hydroxybenzyl)benzene, 2,2'-methylene-di-p-cresol, pyrocatechol and butylpyrocatechols such as 4-tert-butylpyrocatechol. 4,6-di-tert-butylpyrocatechol, hydroquinones such as hydroquinone, 2-methyihydroquinone, 2-tert-butylhydroquinone, 2,5-di-tert-butylhydroquinone, 2,6-di-tert-butylhydroquinone, 2,6-dimethylhydroquinone, 2,3,5-trimethylhydroquinone, benzoquinone, 2,3,5,6-tetrachloro-1,4-benzoquinone, methylbenzoquinone, 2,6-dimethyl benzoquinone, naphthoquinone, or mixtures of two or more thereof.

Phenothiazines, such as phenothiazine and/or derivatives or combinations thereof, or stable organic radicals, such as galvinoxyl radicals and N-oxyl radicals, are preferably taken into consideration as non-phenolic or anaerobic inhibitors, i.e. inhibitors that are active even without oxygen, in contrast with the phenolic inhibitors.

Examples of N-oxyl radicals that can be used are those described in DE 199 56 509. Suitable stable N-oxyl radicals (nitroxyl radicals) can be selected from 1-oxyl-2,2,6,6-tetramethylpiperidine, 1-oxyl-2,2,6,6-tetramethylpiperidin-4-ol (also referred to as TEMPOL), 1-oxyl-2,2,6,6-tetramethylpiperidin-4-one (also referred to as TEMPON), 1-oxyl-2,2,6,6-tetramethyl-4-carboxy-piperidine (also referred to as 4-carboxy-TEMPO), 1-oxyl-2,2,5,5-tetramethylpyrrolidine, 1-oxyl-2,2,5,5-tetramethyl-3-carboxylpyrrolidine (also referred to as 3-carboxy-PROXYL), aluminum-N-nitrosophenylhydroxylamine and diethylhydroxylamine. Further suitable N-oxyl compounds are oximes, such as acetaldoxime, acetone oxime, methyl ethyl ketoxime, salicyloxime, benzoxime, glyoximes, dimethylglyoxime, acetone-O-(benzyloxycarbonyl)oxime and the like.

These compounds are particularly useful and mostly necessary because otherwise the desired storage stability of preferably more than 3 months, in particular 6 months or more, cannot be achieved. The UV stability and in particular the storage stability can be increased considerably in this way.

Furthermore, pyrimidinoi or pyridinol compounds substituted in para-position to the hydroxyl group, as described in patent DE 10 2011 077 248 B1, can be used as inhibitors.

Preferred inhibitors are 1-oxyl-2,2,6,6-tet amethylpiperidine (TEMPO) and 1-oxyl-2,2,6,6-tetramethylpiperidin-4-ol (TEMPOL), catechols, particularly preferably Cert-butyl-pyrocatechol and pyrocatechol the desired properties are achieved by means of the functional group (compared to the reactive diluents otherwise used), BHT and phenothiazine.

The inhibitors can be used either alone or as a combination of two or more thereof, depending on the desired properties of the reaction resin system. The combination of the phenolic and the non-phenolic inhibitors allows a synergistic effect, as is also shown by the setting of a substantially drift-free adjustment of the gel time of the reaction resin composition.

It is preferred that the component (A) comprises at least one inhibitor in an amount of 0 to 5 weight %, preferably 0.001 to 3 weight %, particularly preferably 0.01 to 1 weight %, based on the total amount of component (A).

### Non-reactive thinners/diluents

It is preferred that component (A) comprises at least one non-reactive thinner. Suitable thinners are selected from vegetable oils, such as castor oil, bioalcohols, fatty acids and fatty acid esters and mixtures thereof. It is preferred that the amount of at least one non-reactive thinner in component (A) is in the range of 3 to 60 weight %, more preferably 4 to 55 weight % based on the total amount of component (A).

### Rheology additive

It is preferred that the multi-component resin system according to any one of the embodiments discloses herewith comprises at least one rheology additive. It is preferred that component (A) and/or component (B) comprises at least one rheology additive.

Suitable rheology additives are known in the art and can be selected from: phyllosilicates such as laponites, bentones or montmorillonite, Neuburg siliceous earth, fumed silicas, polysaccharides; polyacrylate, polyurethane or polyurea thickeners and cellulose esters. Wetting agents and dispersants, surface additives, defoamers & deaerators, wax additives, adhesion promoters, viscosity reducers or process additives can also be added for optimization. It is preferred that at least one rheology additive is selected from the group consisting of fumed silica (Cab-O-Sil^{®} TS-720), Jelucel^{®} H30, Collacral^{®} DS 6256, Collacral^{®} HP, Collacral^{®} HS, Collacral^{®} LA 30, Collacral^{®} LR 8989, Collacral^{®} LR 8990, Collacral^{®} PU 75, Collacral^{®} PU 85, Collacral^{®} VAL, Latekoll^{®} D, Latekoll^{®} P, AEROSI^{®} R 104, AEROS!L@ R 200, AEROS!L@ R 202, AEROS!L@ R 300, AEROSIL^{®} R 812, Xanthan gum, algin, casein, carrageenan, guar gum, AEROS!L@ R 7200, AEROSIL^{®} R 8200, AEROSIL^{®} R 9200, Cab-O-Sil^{®} TS-382, Cab-O-Sil^{®} TS-530, AEROSIL^{®} R 805, AEROS!L@ R 380, HDK^{®} H20RH, Crayvallac^{®} SLX, K-Stay 501, Luvothix^{®} AB, 35 Cab-O-Sil^{®} TS 610, Cab-O-Sil^{®} M5, Cab-O-Sil^{®} TS-723, Cab-O-Sil^{®} M-70, Cab-O-Sil^{®} LM-150, Cab-O-Sil^{®} HS-5, and combinations of two or more thereof, preferably selected from the group consisting of AEROS!L@ R 200, AEROS!L@ R 812, AEROS!L@ 805, Cab-O-Sil^{®} TS-720, Cab-O-Sil^{®} MS and combinations of two or more thereof. It is preferred that at least one rheology additive is fumed silica (Cab-O-Sil^{®} TS-720).

It is preferred that the amount of at least one rheology additive in component (A) is in the range of 0 to 1.7 wt.-%, preferably in the range of from 0.01 to 0.9 wt.-%, more preferably 0.1 to 0.7 wt.-% based on the total weight of component (A).

### Fillers

The multi-component resin system material according to the present invention preferably comprises at least one filler. It is preferred that component (A) and/or component (B) comprise at least one filler.

It is preferred that at least one filler is a conventional filler as defined below.

Inorganic fillers, in particular cements such as Portland cement or aluminate cement and other hydraulically setting inorganic substances, quartz, glass, corundum, porcelain, earthenware, barite, light spar, gypsum, talc and/or chalk and mixtures thereof are preferably used as conventional filler. The inorganic fillers can be added in the form of sands, powders, or molded bodies, preferably in the form of fibers or balls. A suitable selection of the fillers with regard to type and particle size distribution/(fiber) length can be used to control properties relevant to the application, such as rheological behavior, press-out forces, internal strength, tensile strength, pull-out forces and impact strength.

Suitable conventional fillers may be selected from barite powders, preferably high density barite powders. It is preferred that barite powders are selected from the group consisting of barium sulfate (type 1 and/or 2), Albawhite 10, Albawhite 40, Albawhite 60, Albawhite 70, Albawhite 80, Albawhite 90, Albawhite 100, Albawhite 110, Barytmehl N, Barytmehl G, Schwerspat C10, Schwerspat C14 and combinations of two or more thereof.

Particularly suitable conventional fillers are quartz powders, fine quartz powders and ultra-fine quartz powders that have not been surface-treated, such as Millisil@ W3, Millisil@ W6, Millisil@ W8 and Millisil@ W12, preferably Millisil@ W12. Silanized quartz powders, fine quartz powders and ultra-fine quartz powders can also be used. These are commercially available, for example, from the Silbond@ product series from Quarzwerke. The product series Silbond@ EST (modified with epoxysilane) and Silbond@ AST (treated with aminosilane) are particularly preferred. Furthermore, it is possible to use conventional filler based on aluminum oxide such as aluminum oxide ultra-fine fillers of the ASFP type from Denka, Japan (d50 = 0.3 pm) or grades such as DAW or DAM with the type designations 45 (d50 < 0.44 pm), 07 (d50 > 8.4 pm), 05 (d50 < 5.5 pm) and 03 (d50 < 4.1 pm). Moreover, the surface treated fine and ultra-fine fillers of the Aktisil AM type (treated with aminosilane, d50 = 2.2 pm) and Aktisil EM (treated with epoxysilane, d50 = 2.2 pm) from Hoffman Mineral can be used. The fillers can be used individually or in any mixture with one another.

The conventional filler may optionally be modified. For example, the filler may be modified, i.e., surface modified, with an adhesion promoter as described below.

The particle size of the conventional filler is not especially important according to the present invention. For example, the conventional filler may have a median particle size d50 of 100 µm or less, or 50 µm or less, such as 20 µm or less.

It is preferred that the amount of at least one filler in component (A), preferably at least one conventional filler according to any one of the embodiments as disclosed herewith, and at least one rheology additive is in the range of from 30 to 90 weight% based on total weight of at least one component (A), more preferably in the range of from 50 to 70 weight%, more preferably in the range of from 60 to 70 weight%, and more preferably in the range of from 62 to 68 weight%.

Present invention further relates to a process for preparing the hardener composition according to any one of embodiments as disclosed herewith or the multi-component resin system according to any one of embodiments as disclosed herewith, the process comprising steps of:
(a) filling a vessel with a free-flowing hardener composition comprising at least one radical initiator, preferably benzoyl peroxide, and at least one phlegmatizing agent, preferably ethylene glycol dibenzoate, and/or diethylene glycol dibenzoate, and/or dicyclohexyl phthalate, more preferably ethylene glycol dibenzoate and/or dicyclohexyl phthalate; and optionally at least one additive and/or filler;
(b) sealing the vessel;
(c) further processing the sealed vessel into a multi-component resin system comprising a reactive resin composition; and
(d) heating the sealed vessel (b) or heating the multi-component resin system (c) to a temperature in the melting range of the at least one phlegmatizing agent or at least one additive, preferably below 90 °C, more preferably below 80 °C, more preferably heating until at least a part of the free-flowing hardener composition is sintered into a bulk material, more preferably heating until at least a part of the free-flowing hardener composition is no longer free-flowing.

It is preferred that the free-flowing hardener composition is chemically the same as presently defined in regard to the hardener composition according to the present invention. Therefore, it is understood that the hardener composition as presently claimed and defined has the same chemical composition as the solid free-flowing hardener composition in step (a).

It is preferred that the vessel is a glass capillary, a plastic capsule or a film bag, preferably a composite film bag. It is preferred that the vessel is a glass capillary or a film bag, preferably a composite film bag It is preferred that sealing of the vessel is carried out by suitable technical means, such as melting, gluing or welding.

It is preferred that the process according to the present invention further comprises the step of cooling (e): cooling of the sealed vessel or the multi-component resin system to a room temperature, preferably cooling of the hardener composition to a temperature in the range of 19 to 25 °C. In another embodiment it is preferred that cooling (e) is carried out to a temperature below the melting range of the at least one phlegmatizing agent or at least one additive.

It is preferred that after cooling step (e) the hardener composition displays a sieve residue of more than 15 % of the total mass of the hardener composition with a sieve analysis carried out with a 1.0 mm standard sieve (DIN ISO 3310-1). It is particularly preferred that the sieve residue is in the range of 15 to 100 %, more preferably in the range of 50 to 80 %, more preferably in the range of 55 to 75 % of the total mass of the hardener composition with a sieve analysis carried out with a 1.0 mm standard sieve (DIN ISO 3310-1). it is preferred that after cooling step (e) less than 20 % of the hardener composition by weight, preferably less than 10 % of the hardener composition, flows out of the opened vessel, preferably a film bag or glass capillary. It is preferred that the opened vessel is opened only on one side and is tilted face downwards vertically (for the purposes to check the amount of hardener to flow out) or downwards and slanted at an angle.

It is preferred that the heating (d) is carried out in a horizontal position.

It is preferred that the heating (d) is carried out for a time in the range of 10 min to 48 hours, preferably in the range of 15 min to 24 hours, more preferably in the range of 20 to 80 min.

It is preferred that the process comprises further processing of the heated sealed vessel of step (d) or the cooled sealed vessel of step (e) into a multi-component resin system comprising a reactive resin composition.

It is preferred that the multi-component resin system comprising a sealed vessel defined in any one of the present embodiments is either capsule-in-capsule or capsule-next to capsule arrangement. Component (B) comprising the hardener composition according to the present invention is in the vessel according to any one of the embodiments as disclosed herewith which is used either next to the capsule of component (A) or inside of the component (A) capsule.

Present invention further relates to a use of the hardener composition according to any one of the embodiments as disclosed herewith or the multi-component resin system according to any one of the embodiments as disclosed herewith for improving the distribution of the hardener composition in a capsule/vessel for fastening anchoring means in substrates.

### Sieving method

Hardner compositions comprising fine particles typically cause production issues in the industrial setting because such hardener compositions produce dust formation and dust build-up. Fine particles of the hardener composition of examples such as E3-E10, prior to temperature treatment, lead to the formation of dust during the industrial filling of film bags, glass capillaries or other vessels. Such dust build-up can reduce product quality and results in a higher cleaning effort of the machine equipment thus impacting productivity. Removing smaller particles from said hardener compositions is therefore beneficial to the production of film bags and glass capillaries, independent of a subsequent temperature treatment after filling step (a) in the sense of present invention.

Preferred method of removing the fine particles is done by a sieving method. Such sieving methods are known to a person skilled in the art. Sieving can be done continuously or discontinuously.

According to the alternative embodiment it is preferred that the hardener composition, prior to sintering (temperature treatment) as presently described and claimed, is sieved to remove fine particles of the hardener composition. In another embodiment, it is preferred that the hardener composition after sieving to remove fine particles does not undergo further temperature treatment for sintering as presently disclosed.

It is preferred that the sieved hardener composition as presently described is used directly in the industrial process for production of chemical anchors for fastening in substrates. Thus, it is preferred that the sieved hardener composition as presently described is filled directly into a glass capillary or a film bag, followed by appropriate sealing of the glass capillary or the film bag. It is preferred that the filled with sieved hardener composition vessel, such as a glass capillary or a film bag, does not undergo heat treatment. In another alternative embodiment, it is preferred that the filled with sieved hardener composition vessel, such as a glass capillary or a film bag is temperature treated according to any one of the embodiments disclosed herewith.

It is preferred that the sieved hardener composition as presently described has the chemical composition according to any one of the embodiments as disclosed herewith.

It is preferred that the sieving method for removing fine particles of the hardener composition is carried out with sieves having a mesh size in the range of 180 µm to 315 µm, even more preferably sieves having a mesh size in the range of 200 µm to 250 µm. It is preferred that after the sieving method to remove fine particle of the hardener composition, the sieved hardener composition has the size distribution with a d50 (median particle size) of greater than or equal to 300 µm, more preferably the size distribution with a d50 of greater than or equal to 500 µm. It is also preferred that the sieved hardener composition has d50 falling in the range of 300 to 1000 µm, more preferably in the range of 500 to 900 µm.

D50 measurement was carried out according to standard DIN ISO 3310-1 and DIN66165. A stack of several suited sieves was used. Sieving was conducted for a duration of 10 minutes with an amplitude of 1mm in a commercially available vibratory sieve shaker. The

Thus, to improve the industrial productivity, it is preferred that the hardener composition according to the present invention is sieved to remove the fine particles, wherein after sieving the hardener composition size distribution has a d50 of greater or equal to 300 µm, more preferably of greater or equal to 500 µm.

Present invention also relates to the use of the sieved hardener composition according to any one of the embodiments as disclosed herewith having, after the sieving, the size distribution d50 of greater than or equal to 300 µm, more preferably d50 of greater or equal to 500 µm, or the multi-component reactive resin system comprising the sieved hardener composition for fastening anchoring means in substrates.

### EXAMPLES

Unless stated otherwise, all constituents of the compositions that are listed here are commercially available and were used in the usual commercial quality.

The film bags (outer and inner) used in all the examples as outlined herewith are composite film bags. The same film bags are used in the commercially available product HVU2 from Hilti.

### 1. Process (b)

### 1.1 Testing of the assembled product which includes an inner film bag with a length of 107 mm and an inner diameter of 3.4 mm.

Process (b) involves heating of the assembled product which comprises the inner film bag (component (B): hardener composition) and the outer film bag (component (A): methacrylate resin composition).

The outer film bag has the dimension of the commercially available product Hilti HVU2 M16×110mm. Component (A), used for all the examples, comprises the same resin composition used in the commercially available product HVU2 from Hilti.

For each example (E1-E12 of Table 1) forty-five pieces of assembled product were temperature treated and then tested: 40 for sieve analysis and 5 for load values.

45 pieces of the assembled product (E1-E12 of Table 1) were placed horizontally in a convection heating cabinet for specified temperature and time. The temperature was kept constant within ±3K.

After cooling to the room temperature (preferably cooling to the temperature in the range of 19 to 25 °C), 40 out of 45 of the products were opened for inspection. The inner film bags were opened lengthwise and visually inspected with regard to the free-flowing nature of the hardener composition such as the adhesion of the hardener composition to the inner wall and signs of decomposition.

The hardener composition was then removed from 40 inner film bags using a spatula and combined together for a sieve analysis. The sieve analysis was carried out with a 1.0 mm standard sieve (according to DIN ISO 3310-1), whereby a sieve residue of less than 15% of the total mass is to be understood as poor sintering behavior of the hardener composition.

The quality of the five remaining products were checked with the reference test R1 for load values and was carried out in a confined test setup according to EAD 330499, Bonded Fasteners for use in Concrete Annex D. Bore hole preparation, cleaning and installation of the anchors was done according to the instruction for use of Hilti HVU2. A deviation of the determined load value of less than 10% from the average of the load values of the reference examples (R1-R6) was used as a criterion to determine the anchor suitability of the examples E1-E10. If the visual evaluation of the hardener composition after temperature treatment gave an indication of decomposition of the hardener composition, no load pull-out tests were carried out and the example was assessed as not suitable for chemical anchors (Examples E9 and E10). Table 1 summarizes the results of these experiments.

**Table 1: Temperature treatment of the assembled products comprising hardener compositions (E1-E12)**

| Examples | **Hardener composition** | **Temp. / Time** | **Attachment** / **Sintered** | **Sieve residue** | **Anchor suitability** |
|---|---|---|---|---|---|
| E1 | Benzoyl peroxide 50% | 75°C | no | < 5% | yes |
| | Gypsum 50% (R1) | 30 min | no | | |
| E2 | Benzoyl peroxide 55% | 80°C | no | <10% | yes |
| | Dimethyl terephthalate 45% (R5) | 20 min | no | | |
| **E3** | Benzoyl peroxide 50% | 75°C | yes | > 60% | yes |
| | Ethylene glycol dibenzoate 50% (R2) | 30 min | yes | | |
| **E4** | Benzoyl peroxide 45% | 80°C | yes | >65% | yes |
| | Ethylene glycol dibenzoate 55% (R3) | 20 min | yes | | |
| **E5** | Benzoyl peroxide 50% | 66°C | yes | >65% | yes |
| | Dicyclohexyl phthalate 50% (R4) | 20 min | yes | | |
| **E6** | Benzoyl peroxide 50% | 80°C | yes | > 60% | yes |
| | Ethylene glycol dibenzoate 50% (R2) | 20 min | yes | | |
| **E7** | Benzoyl peroxide 45% | 80°C | yes | >70% | yes |
| | Ethylene glycol dibenzoate 55% (R3) | 15 min | yes | | |
| **E8** | Benzoyl peroxide 50% | 70°C | yes | >65% | yes |
| | Dicyclohexyl phthalate 50% (R4) | 15 min | yes | | |
| **E9** | Benzoyl peroxide 50% | 60°C | yes | >60% | yes |
| | Ethylene glycol dibenzoate 50% | 24h | yes | | |
| | (R2) | | | | |
| **E10** | Benzoyl peroxide 50% | 75°C | yes | >60% | yes |
| | Ethylene glycol dibenzoate 25% | 20 min | yes | | |
| | Dicyclohexyl phthalate 25% (R6) | | | | |
| E11 | Benzoyl peroxide 50% | 120°C | Decompositio n | - | no |
| | Ethylene glycol dibenzoate 50% | 40 min | | | |
| | (R2) | | | | |
| E12 | Benzoyl peroxide 50% | 100°C | Decompositio n | - | no |
| | Ethylene glycol dibenzoate 50% | 60 min | | | |
| | (R2) | | | | |

Examples E1-E12 were all tested against the corresponding reference examples (R1-R6) labeled in brackets.

Examples E1 and E2 are not according to the present invention because the phlegmatizing agent (gypsum or dimethyl terephthalate) has a high melting point that is far above the decomposition temperature of the hardener, thus the desired sintering effect does not occur.

Examples according to the present invention E3-E9 demonstrate the use of the preferred phlegmatizing agents (ethylene glycol dibenzoate and dicyclohexyl phthalate) at different concentrations and temperature treatments. These examples also show that the resin composition in the outer bag (component (A)) is not adversely affected by temperature treatment.

Example E10 according to the present invention uses two different phlegmatizing agents.

Examples E11 and E12 not according to the invention, show that the temperature and time at which the hardener composition decomposes, results in an unacceptable loss of product quality.

For each reference example (R1-R6) five non-temperature-treated products were tested to determine load values. Reference test R1 for determining said load values was carried out in a confined test setup according to EAD 330499, Bonded Fasteners for use in Concrete Annex D. Bore hole preparation, cleaning and installation of the anchors was done according to the instruction for use of Hilti HVU2. All of the reference examples R1-R6 showed a sieve residue of less than 10% or less than 5% in the sieve analysis shown in Table 2.

**Table 2: Sieve residue of Reference examples R1-R6**

| **Reference examples** | **Hardener composition** | **Sieve residue** |
|---|---|---|
| **R1** | Benzoyl peroxide 50% | < 5% |
| | Gypsum 50% | |
| **R2** | Benzoyl peroxide 50% | <5% |
| | Ethylene glycol dibenzoate 50% | |
| **R3** | Benzoyl peroxide 45% | <10% |
| | Ethylene glycol dibenzoate 55% | |
| **R4** | Benzoyl peroxide 50% | <10% |
| | Dicyclohexyl phthalate 50% | |
| **R5** | Benzoyl peroxide 55% | <10% |
| | Dimethylterephthalat 45% | |
| **R6** | Benzoyl peroxide 50% | <10% |
| | Ethylene glycol dibenzoate 25% | |
| | Dicyclohexyl phthalate 25% | |

### 1.2 Testing of the assembled product which includes an inner film bag with a length of 170 mm and an inner diameter of 7 mm.

Process (b) as outlined above has been repeated for the larger assembled product having an inner film bag with a length of 170 mm and an inner diameter of 7mm. The outer film bag is identical in size and material composition to the commercially available product Hilti HVU2 M24x210mm. The number of capsules tested per assembled product has been reduced to 10 each.

**Table 3: Temperature treatment of the assembled product comprising the hardener compositions (E13-E16)**

| Ex. | **Hardener composition** | **Temp. / Time** | **Attachment / Sintered** | **Sieve residue** | **Anchoring suitability** |
|---|---|---|---|---|---|
| E13 | Benzoyl peroxide 50% | 75°C | no | < 5% | yes |
| | Gypsum 50% (R1) | 50 min | no | | |
| **E14** | Benzoyl peroxide 50% | 75°C | yes | > 60% | yes |
| | Ethylene glycol dibenzoate 50% | 40 min | yes | | |
| | (R2) | | | | |
| **E15** | Benzoyl peroxide 45% | 80°C | yes | >60% | yes |
| | Ethylene glycol dibenzoate 55% | 20 min | yes | | |
| | (R3) | | | | |
| E16 | Benzoyl peroxide 50% | 100°C | Decomposition | - | no |
| | Ethylene glycol dibenzoate 50% | 60 min | | | |
| | (R2) | | | | |

Example E13 is not according to the invention because gypsum cannot be sintered under the chosen conditions as also described above in regard to Table 1.

Examples according to the present invention E14 and E15 show two different sintering conditions which result in a working product.

Example E16 is not according to the invention because the process conditions lead to the decomposition of the hardener composition.

### 2. Process (a)

Testing of the inner film bag with a length of 107 mm and an inner diameter of 3.4 mm.

Process (a) involves temperature treatment of only the inner film bag (component (B): hardener composition).

45 inner film bags of each example (E17-E20) were placed horizontally in a convection heating cabinet for specified temperature and time. The temperature was kept constant within ±3K.

After cooling to the room temperature (about 19 to 25 °C), 40 out of 45 inner film bags were subjected to the visual inspection followed by the sieve analysis as described in regard to the process (b).

Five unopened, temperature-treated inner film bags were inserted into an outer film bag comprising the corresponding methacrylate resin composition and thermally sealed. The dimensions and material of the outer film bag was identical to that of the commercially available product Hilti HVU2 M16×110mm. The assembled product comprising a temperature-treated inner film bag was then evaluated for anchor suitability with a pull-out test as described above in regard to the process (b).

**Table 4: Temperature treatment of the hardener composition (E17-E20)**

| Ex. | **Hardener composition** | **Temp. / Time** | **Attachment / Sintered** | **Sieve residue** | **Anchoring suitability** |
|---|---|---|---|---|---|
| E17 | Benzoyl peroxide 50% | 75°C | no | < 5% | yes |
| | Gypsum 50% | 50 min | no | | |
| | (R1) | | | | |
| **E18** | Benzoyl peroxide 50% | 75°C | yes | > 65% | yes |
| | Ethylene glycol dibenzoate 50% | 10 min | yes | | |
| | (R2) | | | | |
| **E19** | Benzoyl peroxide 45% | 80°C | yes | >65% | yes |
| | Ethylene glycol dibenzoate 55% | 5 min | yes | | |
| | (R3) | | | | |
| E20 | Benzoyl peroxide 50% | 100°C | Decomposition | - | no |
| | Ethylene glycol dibenzoate 50% | 5 min | | | |
| | (R2) | | | | |

Example E17 is not according to the invention because gypsum as mentioned above cannot be sintered under the chosen conditions.

Examples according to the present invention E18 and E19 show two different sintering conditions which result in a working chemical anchor product.

Example E20 is not according to the present invention because the process conditions lead to the decomposition of the hardener composition.

### 3. Process (c)

### Testing of the assembled product which includes an inner glass capillary with a length of 100 mm and an inner diameter of 4 mm and an outer glass capsule with a length of 117mm and a diameter of 14mm.

Process (c) involves heating of the assembled product which comprises the inner glass capillary (component (B): hardener composition) and the outer glass capsule (component (A): methacrylate resin composition). The assembled product corresponds exactly to the commercially available product from Fischerwerke FHB II-P 16 × 95.

For each example (E21-E23 of Table 5) 10 pieces of assembled product were temperature treated and then tested: 5 for the analysis of flowing behavior and 5 for load values.

10 pieces of the assembled product (E21-E23 of Table 5) were placed horizontally in a convection heating cabinet for specified temperature and time. The temperature was kept constant within ±3K.

After cooling to the room temperature (preferably cooling to the temperature in the range of 19 to 25 °C), 5 out of 10 of the products were opened for inspection. The transparent inner glass capillaries were visually inspected with regard to the free-flowing nature of the hardener composition such as the adhesion of the hardener composition to the inner wall and signs of decomposition. Afterwards the inner glass capillaries were cut open on the top and turned over to collect the hardener composition that would flow out. If more than 20% of the hardener composition flows out of the temperature treated glass capillary, that was labeled as poor sintering. If less than 20 % of the hardener composition flows out of the temperature treated glass capillary, such hardener composition is considered as in a solid non-free-flowing form as presently claimed.

Sieve analysis was not performed as the sintered hardener composition could not be removed completely from the inner glass capillaries for technical reasons.

The quality of the five remaining products were checked with the reference test R1 to determine load values and was carried out in a confined test setup according to EAD 330499, Bonded Fasteners for use in Concrete Annex D. Bore hole preparation, cleaning and installation of the anchors was done according to the standard used in the approval process of bonded fasteners. A deviation of the determined load value of less than 10% from the average of the load values of the reference example E21 was used as a criterion to determine the anchor suitability of the examples E22 and E23 according to the present invention. Table 5 summarizes the results of these experiments.

In the same manner as described in regard to the film bags, it is understood that the heat treatment of the inner glass capillary can be carried out before it is installed into a multi-component resin system as presently defined.

**Table 5: Temperature treatment of the assembled product comprising the hardener compositions E21-E23**

| Ex. | **Hardener composition** | **Temp. / Time** | **Attachment / Sintered** | **free-flowing** | **Anchoring suitability** |
|---|---|---|---|---|---|
| E21 | Benzoyl peroxide 50% | - | no | yes | yes |
| | Ethylene glycol dibenzoate 50% | | no | | |
| | (R2) | | | | |
| **E22** | Benzoyl peroxide 50% | 80°C | yes | no | yes |
| | Ethylene glycol dibenzoate 50% | 20 min | yes | | |
| | (R2) | | | | |
| **E23** | Benzoyl peroxide 50% | 80°C | yes | no | yes |
| | Ethylene glycol dibenzoate 50% | 40 min | yes | | |
| | (R2) | | | | |

As can be seen from Table 5, temperature treatment of the assembled product is also successful with glass vessels.

## Claims

1. A hardener composition comprising at least one radical initiator and at least one phlegmatizing agent, wherein at least a part of the hardener composition is in a solid non-free-flowing form.

2. The hardener composition according to claim 1, wherein the hardener composition displays a sieve residue of more than 15 % of the total mass of the hardener composition with a sieve analysis (measured with a 1.0 mm sieve according to DIN ISO 3310-1).

3. The hardener composition according to claim 1 or 2, further comprising at least one additive and/or filler.

4. The hardener composition according to any one of claims 1 to 3, wherein at least one phlegmatizing agent or at least one additive and/or filler has a melting point of less than 90 °C, preferably less than 80 °C.

5. The hardener composition according to any one of claims 1 to 4, wherein at least one phlegmatizing agent is a phthalate comprising phlegmatizing agent and/or a benzoate comprising phlegmatizing agent, preferably a benzoate comprising phlegmatizing agent.

6. The hardener composition according to any one of claims 1 to 5, wherein at least one phlegmatizing agent is selected from the group consisting of ethylene glycol dibenzoate, diethylene glycol dibenzoate, dicyclohexyl phthalate, and mixtures of two or more thereof.

7. The hardener composition according to any one of claims 1 to 6, wherein at least one radical initiator is selected from the group consisting of inorganic peroxides, inorganic persulfates, inorganic perborates, organic peroxides, and mixtures of two or more thereof, preferably at least one radical initiator is at least one organic peroxide.

8. The hardener composition according to any one of claims 1 to 7, wherein at least one radical initiator is selected from the group consisting of diacyl peroxides, diketone peroxides, peroxyester of mono or dicarboxylic acids, alkyl peresters, and mixtures of two or more thereof, preferably diacyl peroxides.

9. The hardener composition according to any one of claims 1 to 8, wherein the hardener composition in enclosed in a vessel, preferably the vessel is a glass capillary, a plastic capsule or a film bag.

10. A multi-component resin system comprising component (A) and component (B), wherein component (A) comprises a reactive resin composition and wherein component (B) comprises the hardener composition according to any one of claims 1 to 9.

11. A process for preparing the hardener composition according to any one of claims 1 to 9 or the multi-component resin system according to claim 10, the process comprising steps of:
(a) filling a vessel with a free-flowing hardener composition comprising at least one radical initiator and at least one phlegmatizing agent and optionally at least one additive and/or filler;
(b) sealing the vessel;
(c) further processing the sealed vessel into a multi-component resin system comprising a reactive resin composition; and
(d) heating the sealed vessel (b) or heating the multi-component resin system (c) to a temperature in the melting range of the at least one phlegmatizing agent or at least one additive, preferably below 90 °C, more preferably below 80 °C, more preferably heating until at least a part of the free-flowing hardener composition is sintered into a bulk material, more preferably heating until at least a part of the free-flowing hardener composition is no longer free-flowing.

12. The process according to claim 11, further comprising:
(e) cooling of the sealed vessel or the multi-component resin system to a temperature below the melting point of the at least one phlegmatizing agent or at least one additive, preferably cooling to a room temperature, more preferably cooling of the hardener composition to a temperature in the range of 19 to 25 °C.

13. The process according to claim 12, wherein after cooling (e) the hardener composition displays a sieve residue of more than 15 % of the total mass of the hardener composition with a sieve analysis (measured with a 1.0 mm sieve according to DIN ISO 3310-1).

14. The process according to any one of claims 11 to 13, wherein the heating (d) is carried out in a horizontal position.

15. The process according to any one of claims 11 to 14, wherein the heating (d) is carried out for a time in the range of 10 min to 48 hours, preferably in the range of 15 min to 24 hours.

16. The process according to any one of claims 11 to 15, comprising further processing of the heated sealed vessel of step (d) or the cooled sealed vessel of step (e) into a multi-component resin system comprising a reactive resin composition.

17. A Use of the hardener composition according to any one of claims 1 to 10 or the multi-component resin system according to claim 11 for fastening anchoring means in substrates.
